# FASCICULE DE BREVET EUROPEEN

(11) **EP 3 068 979 B1**
(45) Date de publication et mention de la délivrance du brevet: **19.05.2021**
(21) Numéro de dépôt: 14809456.8
(22) Date de dépôt: 04.11.2014
(51) Int. Cl.: F01D 25/04, F01D 25/24

(54) **ÉLÉMENT ANNULAIRE DE CARTER DE TURBOMACHINE**
RINGFÖRMIGES BAUTEIL EINES STRÖMUNGSMASCHINENGEHÄUSES
ANNULAR ELEMENT OF A TURBOMACHINE CASING

(30) Priorité: 14.11.2013 FR 1361110
(43) Date de publication de la demande: 21.09.2016
(73) Titulaire: Safran Aircraft Engines, 75015 Paris (FR)
(72) Inventeur: GUINGO, Sébastien Lionel, F-27120 Pacy Sur Eure (FR); BROUSSELLE, Joris, F-27940 Courcelles Sur Seine (FR)
(74) Mandataire: Cabinet Beau de Loménie
(86) Numéro de dépôt international: PCT/FR2014/052791
(87) Numéro de publication internationale: WO 2015/071570

(56) Documents cités:
- EP-A2- 1 726 787
- US-A- 4 452 563
- US-A- 5 429 477

## Description

### Arrière-plan de l'invention

La présente invention concerne les turbomachines, et plus particulièrement les carters de turbomachines.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Dans la description qui suit, les termes "amont" et "aval" sont définis par rapport au sens de circulation normal du fluide à travers la turbomachine.

Une telle turbomachine peut comprendre plusieurs étages, chaque étage comportant normalement deux aubages, à savoir un aubage mobile et un aubage de redressement. Chaque aubage comporte une pluralité d'aubes décalées les unes des autres en une direction latérale. Typiquement, ces aubes sont arrangées radialement autour d'un axe central A. Ainsi, un tel aubage forme un rotor, quand il s'agit d'un aubage mobile, ou un stator, quand il est un aubage de redressement. L'extrémité proximale de chaque aube par rapport à l'axe central A est normalement dénommée pied d'aube, tandis que l'extrémité distale est normalement dénommée tête d'aube. La distance entre le pied et la tête d'aube est connue comme hauteur d'aube. Entre le pied et la tête d'aube, l'aube est formée par un empilement de profils aérodynamiques sensiblement perpendiculaires à un axe radial Y. On entend par « sensiblement perpendiculaire », dans ce contexte, que le plan de chaque profil peut présenter un angle proche de 90°, par exemple entre 60° et 120°, par rapport à l'axe radial Y.

Dans une turbomachine, un tel rotor est normalement entouré d'un carter. Pendant le fonctionnement de la turbomachine, des instabilités aéroélastiques peuvent provoquer des ondes de déformation tournantes dans un élément annulaire de carter, et même, en conséquence, des fissures dans le matériel. Afin de réduire cette sensibilité des structures de carter aux instabilités aéroélastiques, il a notamment été proposé de rendre un tel élément annulaire de carter sensiblement non-axisymétrique, de manière à empêcher la combinaison des modes propres locaux de vibration en une seule onde tournante. Toutefois, une telle solution présente l'inconvénient de compliquer de manière importante la conception et la fabrication des éléments de carter. On connaît aussi, pour l'amortissement de vibrations d'aubes ou pales de rotor, des amortisseurs calés sous les plateformes des aubes, à cheval entre les plateformes d'aubes adjacentes. Lors de la rotation du rotor, les forces centrifuges poussent chaque amortisseur contre les surfaces inférieures de deux aubes adjacentes, et le frottement entre l'amortisseur et ces deux surfaces contribue à dissiper les vibrations des deux aubes adjacentes. Des amortisseurs de ce type sont divulgués, par exemple, dans le brevet français FR 2 923 557 B1. Toutefois, comme le fonctionnement des amortisseurs de ce type est tributaire des forces centrifuges, ils ne sont pas applicables aux pièces stationnaires, comme le stator ou le carter. US 5 429 477 décrit un élément annulaire de carter de turbomachine selon le préambule de la revendication 1.

### Objet et résumé de l'invention

La présente invention vise à remédier à ces inconvénients. En particulier, la présente divulgation vise à proposer un élément annulaire de carter de turbomachine dans lequel les ondes tournantes de déformation puissent être effectivement dissipées de manière simple et sans rendre sa fabrication excessivement complexe ou coûteuse.

Dans au moins un mode de réalisation, ce but peut être atteint grâce au fait que cet élément annulaire, qui comprend une face intérieure, délimitant une veine d'écoulement d'un fluide de travail de la turbomachine, et une face extérieure, présentant au moins une surface de révolution, comprend aussi en outre un amortisseur, comportant une pluralité de spires élastiques jointives serrées autour de ladite surface de révolution de la face extérieure, de manière à exercer une pression contre ladite surface de révolution et entre spires adjacentes. L'amortisseur peut en particulier comporter un élément allongé enroulé autour de ladite surface de révolution de la face extérieure de manière à former ladite pluralité de spires élastiques jointives.

Grâce à ces dispositions, les ondes tournantes de déformation dans l'élément annulaire provoqueront un frottement entre ladite surface de révolution de sa face extérieure et les spires, ainsi qu'entre spires adjacentes, frottement servant à dissiper l'énergie de ces ondes tournantes.

En particulier, ladite surface de révolution peut être une surface cylindrique, ce qui facilite la fabrication de la surface, ainsi que de l'amortisseur prenant appui autour de celle-ci. Toutefois, d'autres formes alternatives sont envisageables, comme par exemple celle d'une surface tronconique.

En outre, ladite surface de révolution peut notamment être située au fond d'une gorge annulaire entourant ladite face extérieure, facilitant ainsi le maintien de l'amortisseur.

Afin d'obtenir l'élasticité souhaitée, lesdites spires peuvent être en fil métallique, par exemple en Inconel®, en acier inoxydable ou en laiton, même si d'autres matériaux sont également envisageables, et notamment des matériaux composites. Afin de faciliter leur production, au moins une spire dudit amortisseur peut présenter une section transversale sensiblement circulaire. Toutefois, alternativement et afin d'augmenter les surfaces de friction, la section transversale d'au moins une spire dudit amortisseur peut présenter au moins une facette sensiblement plate.

Par ailleurs, ledit amortisseur peut comprend en outre un dispositif tendeur pour établir et maintenir une force de serrage déterminée entre deux extrémités dudit amortisseur, afin de permettre un calibrage précis du frottement.

En outre, l'élément annulaire de carter peut comprendre une pluralité d'aubes de redressement solidaires de ladite face intérieure, permettant ainsi d'intégrer un stator dans cet élément annulaire.

La présente divulgation se rapporte aussi à une turbomachine comprenant un tel élément annulaire de carter, ainsi qu'à un procédé d'amortissement d'une onde tournante de déformation d'un tel élément annulaire de carter de turbomachine, dans lequel ladite onde tournante est amortie au moins par frottement entre ladite surface de révolution et les spires dudit amortisseur, ainsi qu'entre spires adjacentes.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en coupe longitudinale d'un turboréacteur ;
- la figure 2 est une vue partielle en perspective d'un stator de turbine du turboréacteur de la figure 1 ;
- la figure 3 illustre schématiquement une onde tournante de déformation du stator de la figure 2 ;
- la figure 4 illustre une vue de détail des extrémités des spires d'un amortisseur du stator de la figure 2
- la figure 5A illustre une section transversale des spires d'un amortisseur du stator de la figure 2 suivant un premier mode de réalisation ; et
- la figure 5B illustre une section transversale des spires d'un amortisseur du stator de la figure 2 suivant un deuxième mode de réalisation.

### Description détaillée de l'invention

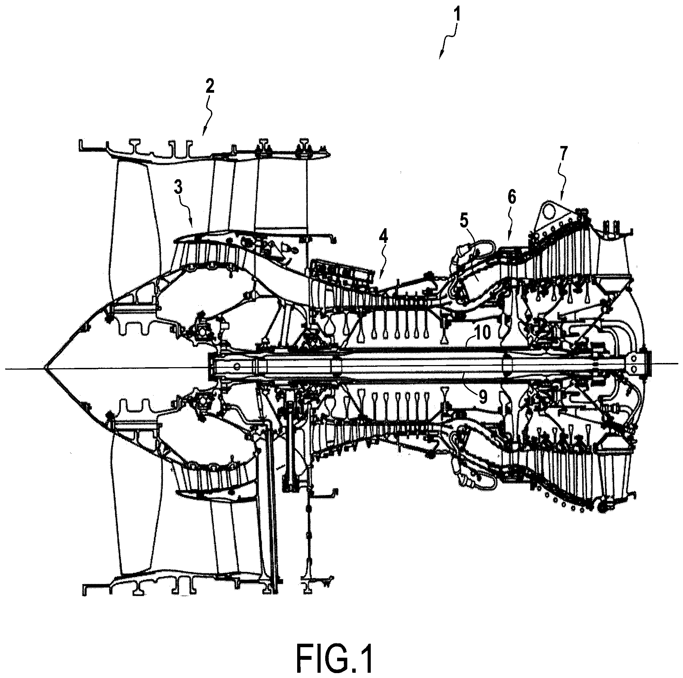

La figure 1 montre un exemple illustratif de turbomachine, plus spécifiquement un turboréacteur axial 1 à double flux. Le turboréacteur 1 illustré comporte une soufflante 2, un compresseur basse pression 3, un compresseur haute pression 4, une chambre de combustion 5, une turbine haute pression 6, et une turbine basse pression 7. La soufflante 2 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10. En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. A travers les arbres 9 et 10, les turbines 6, 7 actionnent ainsi la soufflante 2 et les compresseurs 3,4. L'air propulsé par la soufflante 2 et les gaz de combustion sortant du turboréacteur 1 à travers une tuyère propulsive (non illustrée) en aval des turbines 6, 7 exercent une poussée de réaction sur le turboréacteur 1 et, à travers lui, sur un véhicule ou engin tel qu'un aéroplane (non illustré).

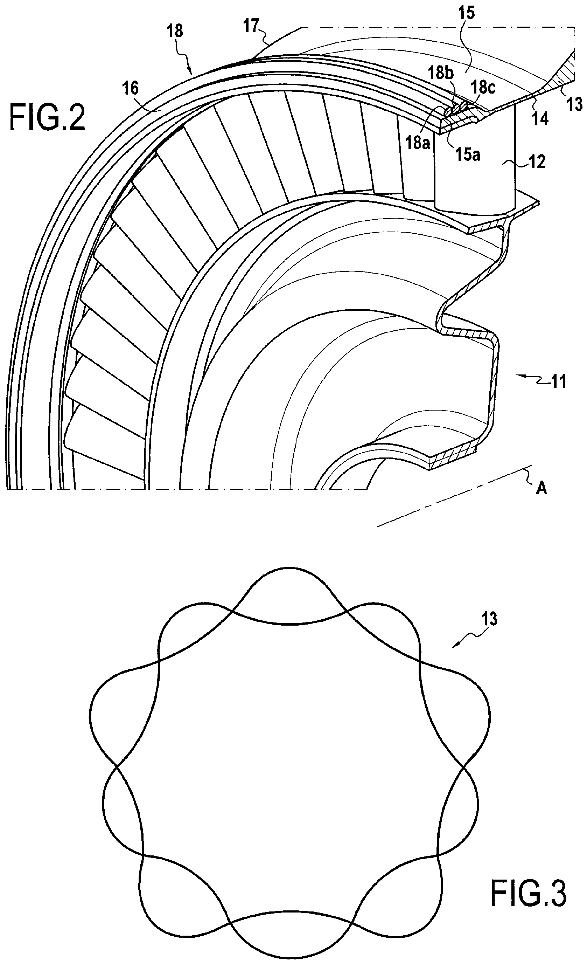

Chaque compresseur 3,4 et chaque turbine 6,7 du turboréacteur 1 comportent plusieurs étages, chaque étage étant formé par un aubage fixe ou stator, et un aubage tournant ou rotor. La figure 2 illustre un stator 11 de turbine axiale, qui peut être l'une quelconque des turbines 6, 7 du turboréacteur 1. Ce stator 11 est en forme de disque, et comprend une pluralité d'aubes de redressement 12 arrangées radialement autour de l'axe de rotation A du rotor correspondant (non illustré), qui est sensiblement parallèle à la direction générale d'écoulement du fluide de travail à travers le turboréacteur 1. En tête des aubes de redressement 12, le stator 11 comporte aussi une casquette annulaire reliant les aubes 2. Cette casquette annulaire, qui se prolonge axialement en direction amont et/ou aval de manière à entourer aussi au moins un rotor adjacent (non illustré) forme ainsi un élément annulaire 13 de carter. Cet élément annulaire 13 présente une face intérieure 14, délimitant la veine d'écoulement du fluide de travail de la turbomachine, une face extérieure 15, et des bords amont et aval 16, 17 formant joint avec d'autres éléments de carter adjacents.

En fonctionnement, l'écoulement du fluide de travail et le passage des têtes d'aube du rotor à proximité de la face intérieure 14 peut provoquer des vibrations aéroélastiques locales pouvant engendrer une onde de déformation tournante autour de l'élément annulaire 13. Un exemple d'une telle onde tournante est illustré sur la figure 3, dans laquelle la déformation radiale a été exagérée par souci de clarté.

Une telle onde tournante peut être source de fatigue du matériau de l'élément annulaire 13, créant des fissures dans cette pièce. Afin de dissiper l'énergie de cette onde tournante et ainsi protéger l'élément annulaire 13, celui-ci peut être équipé d'un amortisseur 18 comportant un élément allongé formant une pluralité de spires élastiques jointives 18a-18c serrées autour d'une surface de révolution 15a de la face extérieure 15, de manière à exercer une pression contre ladite surface de révolution 15a et entre les spires adjacentes. Dans le mode de réalisation illustré, cette surface de révolution 15a est cylindrique. Les spires 18a-18c peuvent notamment être réalisées à partir d'un fil métallique, par exemple en Inconel®, en acier inoxydable ou en laiton, dont la surface pourrait être traitée afin d'adapter le coefficient de frottement et/ou éviter la corrosion de contact avec la surface 15a. D'autres matériaux élastiques seraient toutefois aussi envisageables.

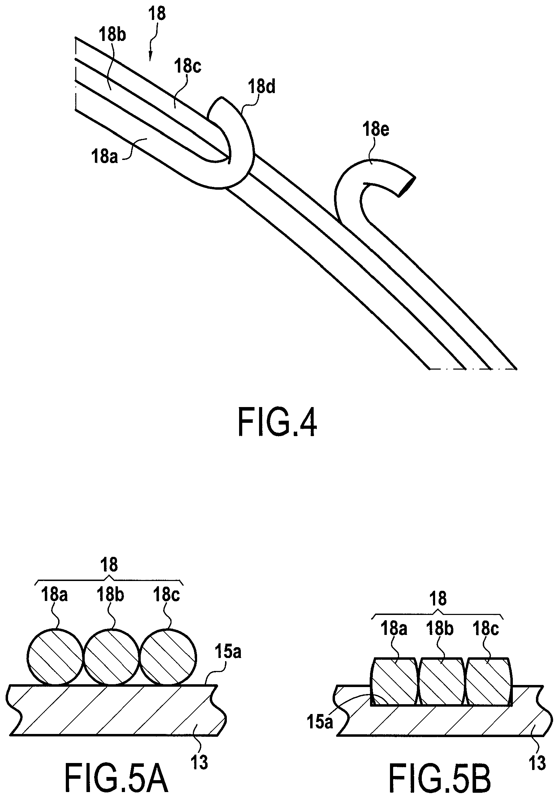

Afin de mettre en tension les spires 18a-18c, et de maintenir cette tension, un dispositif tendeur (non illustré) peut relier les deux extrémités opposées de cet amortisseur 18. Pour faciliter l'attache de cet amortisseur à ces extrémités 18d, 18e, celles-ci peuvent être recourbées vers l'extérieur, comme illustré sur la figure 4. Ce dispositif tendeur peut par exemple prendre la forme d'un fil d'attache, ou d'un tendeur à vis sans fin.

Une section transversale des spires 18a,18b,18c d'un amortisseur 18 suivant un premier mode de réalisation est illustrée sur la figure 5A. Dans ce mode de réalisation, chacune des spires 18a, 18b, 18c présente une section transversale ronde. En mettant en tension les spires 18a-18c, chacune d'elles se serre autour de la surface cylindrique 15a. Cette pression aux points de contact des spires 18a-18c avec la surface 15a se traduit en un frottement lors de l'avancement des ondes tournantes de déformation radiale de l'élément annulaire 13, frottement contribuant à dissiper l'énergie de ces ondes, et donc à les amortir. Cet effet est renforcé par le frottement entre les spires 18a-18c, dû au contact entre spires adjacentes.

Dans un mode de réalisation alternatif, illustré sur la figure 5B, la section transversale de chacune des spires 18a-18c n'est pas sensiblement ronde, mais présente des facettes plates face à la surface 15a et aux spires adjacentes. On maximise ainsi les surfaces de contact de chaque spire avec la surface 15a, ainsi qu'avec les spires adjacentes. Il est également envisageable d'aplatir uniquement le côté intérieur de chaque spire, de manière à augmenter uniquement la surface en contact avec la surface 15a, ou uniquement les côtés latéraux, de manière à augmenter uniquement la surface en contact avec les spires adjacentes.

Ce deuxième mode de réalisation se distingue aussi en ce que les spires 18a-18c sont reçues dans une gorge annulaire peu profonde entourant la face extérieure 15 de l'élément annulaire 13. La surface 15a en contact avec les spires 18a-18c forme le fond de cette gorge. Cette gorge facilite le positionnement et le maintien en position de l'amortisseur 18 autour de la surface 15a.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, bien que dans les deux modes de réalisation illustrés la surface de la face extérieure de l'élément annulaire de carter soit une surface cylindrique, d'autres formes de surfaces de révolution, et en particulier des formes tronconiques, sont également envisageables. En outre, des caractéristiques individuelles des différents modes de réalisation évoqués peuvent être combinées dans des modes de réalisation additionnels. En particulier, la gorge du deuxième mode de réalisation peut être combinée avec des spires à section ronde, comme celles du premier mode de réalisation. Par conséquent, la description et les dessins doivent être considérés dans un sens illustratif plutôt que restrictif.

## Revendications

1. Elément annulaire (13) de carter de turbomachine, comprenant au moins :
une face intérieure (14), délimitant une veine d'écoulement d'un fluide de travail de la turbomachine ;
une face extérieure (15) ; et
un amortisseur (18) ;
cet élément annulaire (13) étant **caractérisé en ce que** l'amortisseur (18) comporte une pluralité de spires élastiques jointives (18a,18b,18c) serrées autour d'une surface de révolution (15a) de la face extérieure (15), de manière à exercer une pression contre ladite surface de révolution (15a) et entre spires adjacentes.

2. Elément annulaire (13) de carter de turbomachine suivant la revendication 1, dans lequel ladite surface de révolution (15a) est une surface cylindrique.

3. Elément annulaire (13) de carter de turbomachine suivant l'une quelconque des revendications précédentes, dans lequel ladite surface de révolution (15a) est située au fond d'une gorge annulaire entourant ladite face extérieure (15).

4. Elément annulaire (13) de carter de turbomachine suivant l'une quelconque des revendications précédentes, dans lequel au moins une spire (18a,18b,18c) dudit amortisseur (18) présente une section transversale sensiblement circulaire.

5. Elément annulaire (13) de carter de turbomachine suivant l'une quelconque des revendications 1 à 3, dans lequel la section transversale d'au moins une spire (18a,18b,18c) dudit amortisseur (18) présente au moins une facette sensiblement plate.

6. Elément annulaire (13) de carter de turbomachine suivant l'une quelconque des revendications précédentes, dans lequel ledit amortisseur (18) comprend en outre un dispositif tendeur pour établir et maintenir une force de serrage déterminée entre deux extrémités dudit amortisseur (18).

7. Elément annulaire (13) de carter de turbomachine suivant l'une quelconque des revendications précédentes, dans lequel l'au moins une spire (18a,18b,18c) dudit amortisseur (18) est en fil métallique.

8. Elément annulaire (13) de carter de turbomachine suivant l'une quelconque des revendications précédentes, comprenant en outre une pluralité d'aubes de redressement (12) solidaires de ladite face intérieure (14).

9. Turbomachine comprenant un élément annulaire de carter (13) suivant l'une quelconque des revendications précédentes.

10. Procédé d'amortissement d'une onde tournante de déformation d'un élément annulaire (13) de carter de turbomachine suivant l'une quelconque des revendications 1 à 8, dans lequel ladite onde tournante est amortie au moins par frottement entre ladite surface de révolution (15a) et lesdites spires (18a,18b,18c).

## Patentansprüche

1. Ringförmiges Bauteil (13) eines Strömungsmaschinengehäuses, umfassend mindestens:
eine innere Seite (14), die einen Durchflusskanal eines Arbeitsfluids der Strömungsmaschine begrenzt;
eine äußere Seite (15); und
einen Dämpfer (18);
wobei dieses ringförmige Bauteil (13) **dadurch gekennzeichnet ist, dass** der Dämpfer (18) eine Vielzahl fugendichter elastischer Windungen (18a, 18b, 18c) aufweist, die um eine Drehfläche (15a) der äußeren Seite (15) gespannt sind, so dass ein Druck gegen die Drehfläche (15a) und zwischen benachbarten Windungen ausgeübt wird.

2. Ringförmiges Bauteil (13) eines Strömungsmaschinengehäuses nach Anspruch 1, wobei die Drehfläche (15a) eine zylindrische Fläche ist.

3. Ringförmiges Bauteil (13) eines Strömungsmaschinengehäuses nach einem der vorangehenden Ansprüche, wobei sich die Drehfläche (15a) auf dem Boden einer ringförmigen Nut befindet, die die äußere Seite (15) umgibt.

4. Ringförmiges Bauteil (13) eines Strömungsmaschinengehäuses nach einem der vorangehenden Ansprüche, wobei mindestens eine Windung (18a, 18b, 18c) des Dämpfers (18) einen etwa kreisförmigen Querschnitt aufweist.

5. Ringförmiges Bauteil (13) eines Strömungsmaschinengehäuses nach einem der Ansprüche 1 bis 3, wobei der Querschnitt von mindestens einer Windung (18a, 18b, 18c) des Dämpfers (18) mindestens eine etwa flache Facette aufweist.

6. Ringförmiges Bauteil (13) eines Strömungsmaschinengehäuses nach einem der vorangehenden Ansprüche, wobei der Dämpfer (18) ferner eine Spannvorrichtung umfasst, um eine bestimmte Spannkraft zwischen zwei Enden des Dämpfers (18) aufzubauen und aufrecht zu halten.

7. Ringförmiges Bauteil (13) eines Strömungsmaschinengehäuses nach einem der vorangehenden Ansprüche, wobei die mindestens eine Windung (18a, 18b, 18c) des Dämpfers (18) aus Metalldraht ist.

8. Ringförmiges Bauteil (13) eines Strömungsmaschinengehäuses nach einem der vorangehenden Ansprüche, umfassend ferner eine Vielzahl von Leitschaufeln (12), die mit der inneren Seite (14) fest verbunden sind.

9. Strömungsmaschine, umfassend ein ringförmiges Gehäusebauteil (13) nach einem der vorangehenden Ansprüche.

10. Verfahren zum Dämpfen einer drehenden Deformationswelle eines ringförmigen Bauteils (13) eines Strömungsmaschinengehäuses nach einem der Ansprüche 1 bis 8, wobei die drehende Welle mindestens durch Reibung zwischen der Drehfläche (15a) und den Windungen (18a, 18b, 18c) gedämpft wird.

## Claims

1. An annular element (13) for a turbomachine casing, the element having at least:
- an inside face (14), defining a flow passage for a working fluid of the turbomachine;
- an outside face (15); and
- a damper (18);
said annular element (13) being **characterized in that** the damper (18) comprises a plurality of touching resilient coil turns (18a, 18b, 18c) fitted tightly around a surface of revolution (15a) of the outside face (15), in such a manner as to exert pressure on said surface of revolution (15a) and between adjacent coil turns.

2. An annular element (13) for a turbomachine casing according to claim 1, wherein said surface of revolution (15a) is a cylindrical surface.

3. An annular element (13) for a turbomachine casing according to either preceding claim, wherein said surface of revolution (15a) is situated at the bottom of an annular groove surrounding said outside face (15).

4. An annular element (13) for a turbomachine casing according to any preceding claim, wherein at least one coil turn (18a, 18b, 18c) of said damper (18) presents a winding cross-section that is substantially circular.

5. An annular element (13) for a turbomachine casing according to any one of claims 1 to 3, wherein the winding cross-section of at least one coil turn (18a, 18b, 18c) of said damper (18) presents at least one facet that is substantially flat.

6. An annular element (13) for a turbomachine casing according to any preceding claim, wherein said damper (18) further comprises a tensioning device for establishing and maintaining a determined tightening force between two ends of said damper (18).

7. An annular element (13) for a turbomachine casing according to any preceding claim, wherein at least one coil turn (18a, 18b, 18c) of said damper (18) is made of metal wire.

8. An annular element (13) for a turbomachine casing according to any preceding claim, further comprising a plurality of guide vanes (12) that are secured to said inside face (14).

9. A turbomachine comprising an annular casing element (13) according to any preceding claim.

10. A method of damping a rotating wave of distortion of an annular casing element (13) of a turbomachine casing according to any one of claims 1 to 8, wherein said rotating wave is damped at least by friction between said surface of revolution (15a) and said coil turns (18a, 18b, 18c).
